Europäisches Patentamt

European Patent Office

Office européen des brevets

(19)

(11) Numéro de publication: **0 238 103 B1**

## (12) FASCICULE DE BREVET EUROPEEN

(45) Date de publication de fascicule du brevet: **15.04.92** (51) Int. Cl.⁵: **C01B 13/32**, C01G 25/02

(21) Numéro de dépôt: **87200017.9**

(22) Date de dépôt: **07.01.87**

(54) **Procédé de fabrication d'une poudre d'oxyde métallique pour matériaux céramiques.**

(30) Priorité: **20.01.86 FR 8600833**

(43) Date de publication de la demande:
**23.09.87 Bulletin 87/39**

(45) Mention de la délivrance du brevet:
**15.04.92 Bulletin 92/16**

(84) Etats contractants désignés:
**AT BE CH DE ES FR GB GR IT LI LU NL SE**

(56) Documents cités:
**FR-A- 672 002**
**FR-A- 2 173 980**
**US-A- 4 543 341**

**CHEMICAL ABSTRACTS, vol. 104, no. 18, 1986, page 347, résumé no. 154468m, Columbus, Ohio, US; & JP-A-60 246 254 (DAINIPPON INK AND CHEMICALS INC) 05.12.1985**

(73) Titulaire: **SOLVAY**
**Rue du Prince Albert, 33**
**B-1050 Bruxelles(BE)**

(72) Inventeur: **Legrand, Franz**
**Rue des Vaches, 71**
**B-7300 Ouaregnon(BE)**
Inventeur: **Van den Bossche-de Bruycker, Patricia**
**Rue Henri Wafelaerts, 12**
**B-1060 Bruxelles(BE)**
Inventeur: **Lerot, Luc**
**Avenue du Centaure, 31**
**B-1200 Bruxelles(BE)**

(74) Mandataire: **Anthoine, Paul et al**
**SOLVAY Département de la Propriété Industrielle 310, rue de Ransbeek**
**B-1120 Bruxelles(BE)**

## Description

L'invention a pour objet la fabrication de matériaux céramiques.

Elle concerne plus particulièrement un procédé pour la fabrication de poudres d'oxyde métallique destinées à la mise en oeuvre de matériaux céramiques.

Il est bien connu que l'on peut préparer des poudres d'oxydes métalliques à partir de l'hydrolyse d'alcoolates métalliques. A cet effet, on prépare généralement une solution diluée d'un alcoolate métallique dans un alcool, et on verse dans celle-ci une solution alcoolique d'eau. La réaction est généralement opérée sous une atmosphère inerte d'azote, à la température ambiante. A l'issue du procédé, on recueille la poudre d'oxyde métallique qui a précipité (Better Ceramics Through Chemistry - Materials Research Society Symposia Proceedings - Vol. 32 - 1984 - Elsevier Science Publishing Co., Inc. - BRUCE FEGLEY et al : "Synthesis, characterization, and processing of monosized ceramic powders", pages 187 à 197; brevet US-A-4,543,341).

En général, les poudres d'oxydes métalliques obtenues à l'issue de ce procédé connu comportant des agglomérats, leur distribution granulométrique est dispersée et la forme des grains est irrégulière, ce qui est désavantageux pour la fabrication des matériaux céramiques.

L'invention vise à remédier à cet inconvénient en fournissant un procédé amélioré pour la fabrication de poudres d'oxyde métallique à l'état de grains sphériques réguliers, dans lesquelles les agglomérats sont fortement réduits, voire inexistants, et dont la distribution granulométrique est peu étendue.

En conséquence, l'invention concerne un procédé de fabrication d'une poudre d'oxyde métallique pour matériaux céramiques, par hydrolyse d'un alcoolate métallique, selon lequel l'hydrolyse est opérée en présence d'un composé organique acide contenant plus de six atomes de carbone dans sa molécule.

Dans le cadre de l'invention, on entend désigner par matériaux céramiques, des matériaux inorganiques non métalliques, dont la mise en oeuvre au départ d'une poudre requiert des traitements à haute température, tels que des traitements de fusion ou de frittage (P. William Lee - "Ceramics" - 1961 - Reinhold Publishing Corp. - page 1; Kirk Othmer Encyclopedia of Chemical Technology - Third edition - Volume 5 - 1979; John Wiley & Sons, USA - pages 234 à 236 : "Ceramics. scope").

Dans le procédé selon l'invention, l'alcoolate métallique désigne tout composé dans lequel un métal est relié par l'intermédiaire d'un atome d'oxygène, à un groupement hydrocarboné tel qu'un groupement aromatique ou un groupement aliphatique linéaire ou cyclique, saturé ou insaturé, non substitué ou substitué partiellement ou totalement. Les alcoolates métalliques à groupements aliphatique sont spécialement recommandés; ceux à groupements aliphatiques saturés non substituées sont préférés, tels que, par exemple, les groupements méthyl, éthyl, n-propyl iso-propyl, n-butyl et iso-butyl.

L'hydrolyse a pour fonction de décomposer l'alcoolate au moyen d'eau, pour produire l'oxyde métallique hydraté et un alcool. On peut travailler indifféremment avec un excès ou un défaut d'eau par rapport à la quantité strictement nécessaire pour décomposer la totalité de l'alcoolate.

Selon l'invention, l'hydrolyse est opérée en présence d'un composé organique acide.

On entend désigner par composé organique acide tout composé organique qui présente un caractère acide. Les acides carboxyliques saturés et insaturés et leurs dérivés sont spécialement recommandés. Il convient de sélectionner des acides ou des dérivés d'acides contenant plus de six atomes de carbone dans leur molécule. Des acides carboxyliques qui se sont révélés spécialement avantageux sont ceux contenant au moins huit atomes de carbone dans leur molécule, tels que les acides octanoïque, laurique, palmitique, isopalmitique, oléique et stéarique.

La quantité optimum de composé organique acide à mettre en oeuvre dépend à la fois du composé acide sélectionné et de l'alcoolate métallique mis en oeuvre, et elle doit être déterminée dans chaque cas particulier en fonction de la qualité recherchée pour la morphologie de la poudre céramique. En général, il convient de réaliser un rapport molaire entre le composé organique acide et l'alcoolate métallique au moins égal à $10^{-3}$; dans le cas d'un acide carboxylique, des rapports molaires préférés sont ceux situés entre 0,005 et 3; les rapports molaires compris entre 0,015 et 0,35 conviennent bien.

Dans l'exécution du procédé selon l'invention, il est recommandé de réaliser un mélange homogène de l'alcoolate avec l'eau et le composé organique acide le plus rapidement possible après l'addition de l'eau à l'alcoolate, avant que débute la nucléation de l'oxyde métallique. A cet effet, l'alcoolate et l'eau sont avantageusement mis en oeuvre à l'état de solutions organiques. Le cas échéant, il est opportun que le solvant organique de l'alcoolate soit exempt d'eau. On peut utiliser des solvants organiques identiques ou différents pour l'alcoolate, d'une part, et pour l'eau, d'autre part. Dans le cas où l'alcoolate et l'eau sont dissous dans des solvants organiques différents, il convient généralement de choisir des solvants organiques miscibles. Les alcools et leurs dérivés conviennent généralement bien, notamment le méthanol, l'éthanol, le n-propanol, l'iso-propanol, le n-butanol et l'iso-butanol. Il convient par ailleurs, d'éviter la présence de particules solides dans les solutions organiques de l'alcoolate et de l'eau. Le mélange des solutions peut par exemple être opéré de la manière décrite dans la demande de brevet GB-A-2168334.

Les taux de dilution optimum de l'alcoolate et de l'eau dans leurs solvants organiques respectifs dépendent de divers facteurs, notamment de l'alcoolate mis en oeuvre, de la quantité et de la nature du composé organique acide sélectionné, de la température de travail, du taux de turbulence du milieu réactionnel et de la qualité recherchée pour la poudre d'oxyde métallique; ils doivent être déterminés dans chaque cas particulier par un travail de routine au laboratoire. En règle générale, on recommande que la solution organique de l'alcoolate et la solution organique d'eau contiennent respectivement moins de 2 moles d'alcoolate métallique par litre et moins de 5 moles d'eau par litre. Des concentrations molaires spécialement avantageuses sont celles comprises entre 0,05 et 1 pour la solution d'alcoolate métallique et entre 0,1 et 3 pour la solution organique d'eau.

L'hydrolyse peut être effectuée dans l'air ambiant. Pour éviter le risque d'une décomposition incontrôlée de l'alcoolate métallique, on peut, selon une forme de réalisation particulière du procédé selon l'invention, exécuter l'hydrolyse sous une atmosphère gazeuse exempte d'humidité. L'air sec, déshydraté, l'azote et l'argon sont des exemples d'atmosphères utilisables dans cette forme de réalisation de l'invention.

En principe, la température et la pression ne sont pas critiques. En général, dans la majorité des cas, on peut travailler à la température ambiante et la pression atmosphérique normale.

Dans le procédé selon l'invention, on peut généralement mélanger le composé acide avec l'eau ou, de préférence, avec l'alcoolate métallique, avant l'hydrolyse. On peut aussi, en variante, mélanger les trois constituants simultanément.

L'oxyde métallique obtenu à l'issue du procédé selon l'invention est généralement à l'état amorphe, hydraté et se présente à l'état d'une poudre de fines particules généralement sphériques, présentant un diamètre n'excédant pas 5 micromètres, habituellement compris entre 0,05 et 2 micromètres.

La poudre peut éventuellement subir un séchage et un traitement thermique à une température appropriée, pour éliminer le composé organique acide, l'eau et les solvants organiques qui l'imprègnent. Le traitement thermique peut être réglé pour contrôler la porosité ou l'éliminer complètement. Il peut par ailleurs être réglé pour provoquer une cristallisation de la poudre d'oxyde métallique.

Le procédé selon l'invention trouve notamment une application intéressante pour la production d'oxydes de métaux appartenant aux groupes II, III et IV du tableau périodique des éléments, par hydrolyse d'alcoolates de ces métaux. Il trouve une application avantageuse pour la production de poudres de zircone, par hydrolyse d'alcolate de zirconium.

Les quelques exemples dont la description va suivre servent à illustrer l'invention. Ces exemples sont donnés en référence aux figures annexées qui sont huit reproductions photographiques de poudres de zircone, au grossissement 20 000 X.

Les exemples concernent des essais de fabrication de poudres de zircone selon le processus opératoire suivant, conforme à l'invention.

Dans une chambre de réaction maintenue sous atmosphère d'azote anhydre à une température de 25°C, on a mis en oeuvre une solution organique d'un alcolate de zirconium et une quantité déterminée d'acide carboxylique et on a soumis le mélange résultant à une agitation modérée pendant une dizaine de minutes. Ensuite, tout en maintenant le mélange sous une forte agitation, on y a ajouté en une fois une quantité définie d'une solution organique d'eau et on a fait subir au mélange réactionnel un mûrissage de 2 heures. A l'issue du mûrissage, on a soumis le mélange réactionnel à une centrifugation et on a recueilli la poudre de zircone que l'on a lavée avec de l'éthanol anhydre, puis séchée au moyen d'un courant d'air à température ambiante.

Dans les exemples, on a calculé le diamètre moyen des poudres à partir de mesures sur les reproductions photographiques, le diamètre moyen étant défini par la relation suivante (G. HERDAN - "Small particles statistics" - 2ème édition - 1960 - Butterworths - pages 10 et 11) :

$$d = \frac{\sum n_i d_i}{\sum n_i}$$

où $n_i$ désigne le nombre de particules de diamètre $d_i$.

### Exemple 1

Cet exemple se caractérise par les conditions opératoires partulières suivantes :
- solution organique d'alcoolate de zirconium : 100 ml d'une solution 0,2 M de n-butoxyde de zirconium dans de l'éthanol;
- acide carboxylique : $1,6.10^{-3}$ mole d'acide oléique;
- solution organique d'eau : 100 ml d'une solution 0,7 M d'eau dans de l'éthanol.

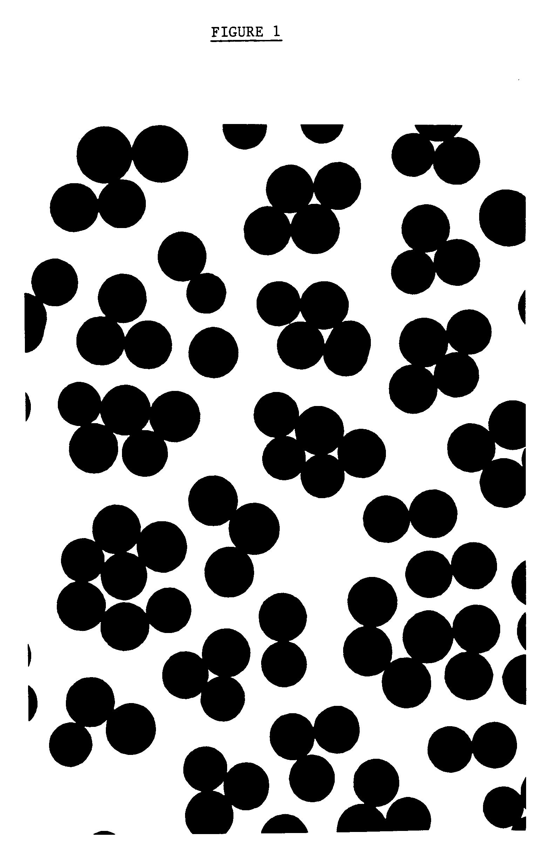

La poudre de zircone obtenue est représentée à la figure 1. Elle présente un diamètre moyen de particules égal à 0,59 micromètres.

### Examples 2 à 4

Ces exemples se différencient de l'exemple 1 uniquement par la sélection de l'acide carboxylique, qui a été :
- l'acide octanoïque (exemple 2)
- l'acide laurique (exemple 3)
- l'acide isopalmitique (exemple 4)

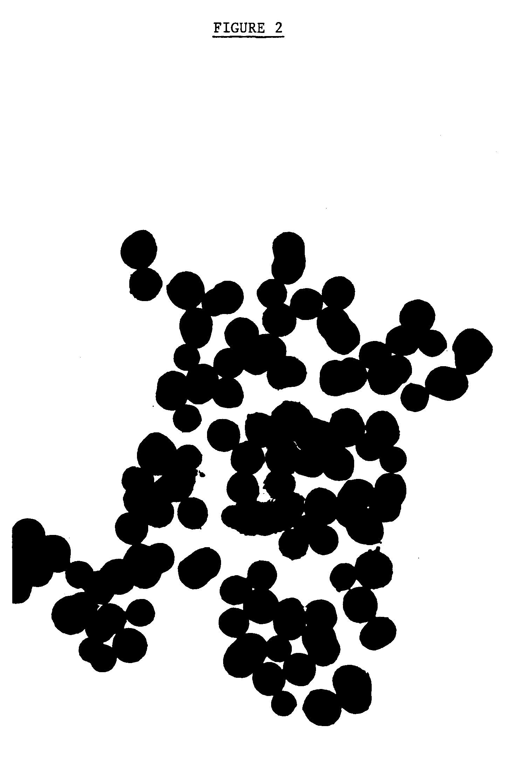

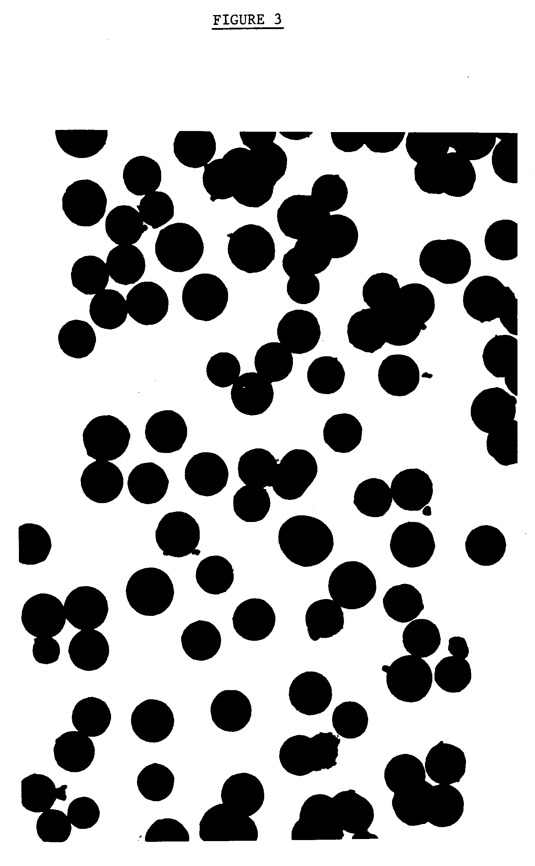

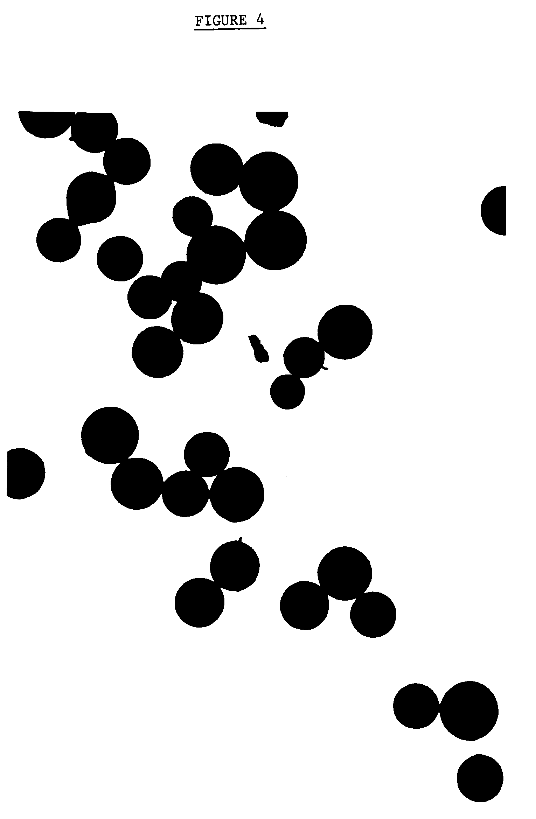

Les diamètres moyens de particules des poudres de zircone obtenues à chaque essai sont répertoriés au tableau suivant. Les figures 2 à 4 montrent des échantillons de ces poudres.

| Exemple No. | Acide | Diamètre moyen des particules (micromètres) | Figure No. |
|---|---|---|---|
| 2 | octanoïque | 0,35 | 2 |
| 3 | laurique | 0,49 | 3 |
| 4 | isopalmitique | 0,58 | 4 |

### Exemple 5 et 6

Ces exemples se différencient de l'exemple 1 uniquement par la quantité d'acide oléique mise en oeuvre, qui a été :
- exemple 5 : $0,96 \times 10^{-3}$ mole;
- exemple 6 : $3,16 \times 10^{-3}$ mole.

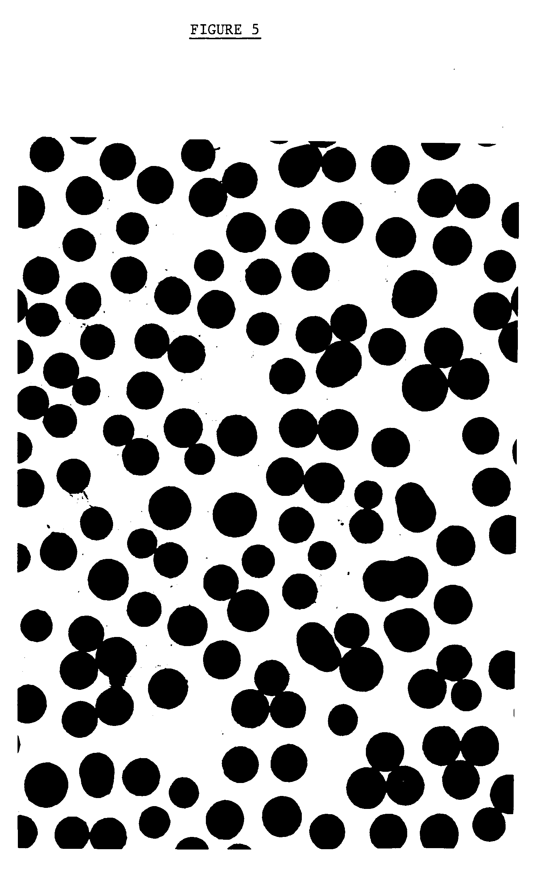

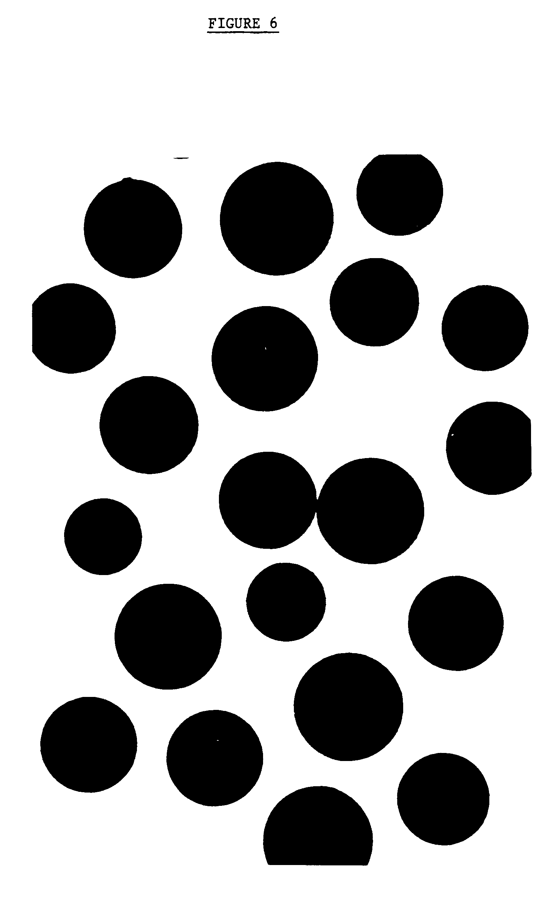

Les figures 5 et 6 montrent des échantillons de poudres obtenues repectivement à l'essai de l'exemple 5 et à l'essai de l'exemple 6. Ces poudres ont été caractérisées par un diamètre moyen de particules égal à :
- exemple 5 : 0,46 micromètres;
- exemple 6 : 1,20 micromètres.

### Exemple 7

Cet exemple se différencie de l'exemple 1 par la sélection de l'alcoolate, qui a été le n-propoxyde de zirconium. Toutes les autres conditions sont restées inchangées.

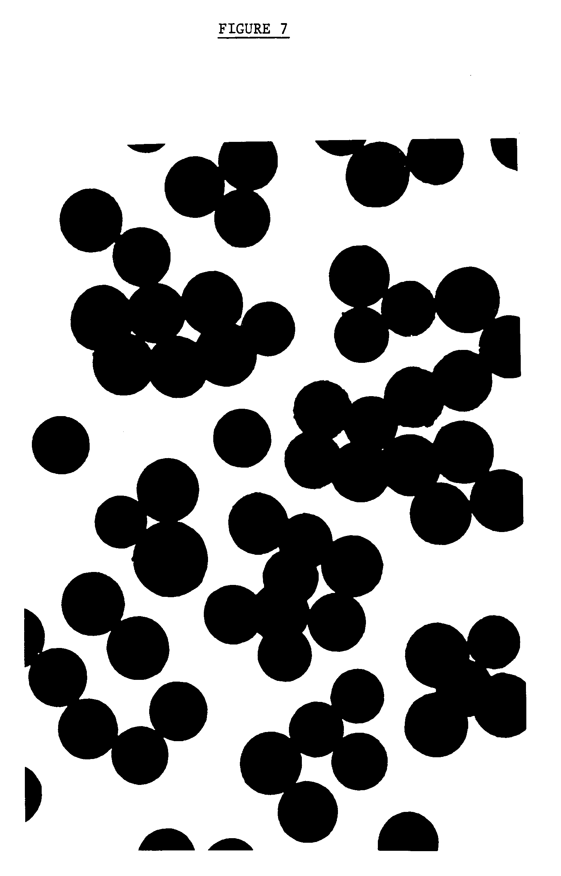

La figure 7 montre un échantillon de la poudre de zircone obtenue. Celle-ci présentait un diamètre moyen de particules égal à 0,70 micromètres.

### Exemple 8

Cet exemple se caractérise par les paramètres opératoires suivants :
- solution organique d'alcoolate de zirconium : 100 ml d'une solution 0,2 M de n-propoxyde de zirconium dans du n-propanol;
- acide carboxylique : $3,2.10^{-3}$ mole d'acide oléique;
- solution organique d'eau : 100 ml d'une solution 0,7 M d'eau dans du n-propanol.

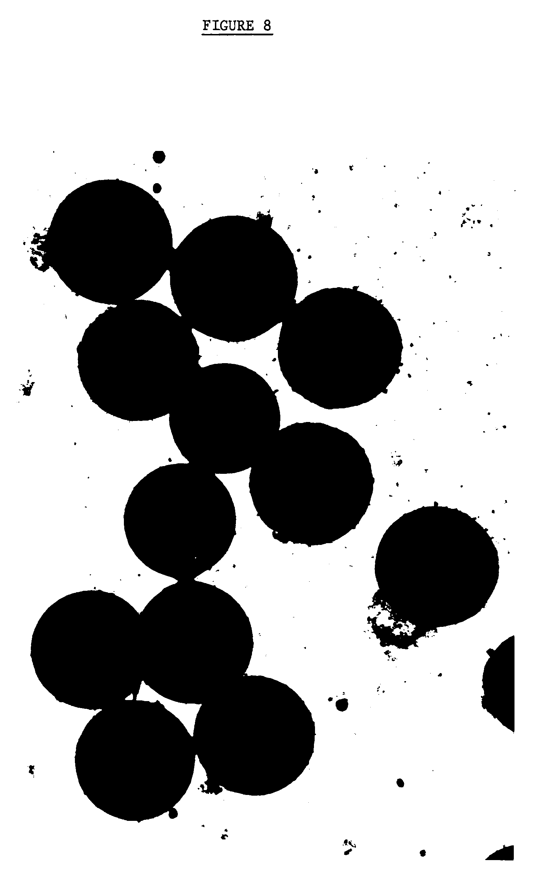

La poudre de zircone obtenue est représentée à la figure 8. Elle présentait un diamètre moyen de particules égal à 1,5 micromètres.

### Exemple 9

Cet exemple se caractérise par les conditions opératoires suivantes :
- solution organique d'alcoolate de zirconium : 100 ml d'une solution 0,2 M de n-butoxyde de zirconium dans du n-butanol;
- acide carboxylique : $6,4.10^{-3}$ mole d'acide oléique;
- solution organique d'eau : 100 ml d'une solution 0,7 M d'eau du n-butanol.

La poudre de zircone obtenue présentait un diamètre moyen de particules égal à 2,6 micronmètres.

Exemple 10

Cet exemple se différencie des exemples précédents par le fait que l'acide carboxylique a été mélangé à la solution organique d'eau, avant l'hydrolyse.

Les conditions opératoires ont été les suivantes :
- solution organique d'alcoolate de zirconium : 100 ml d'une solution 0,2 M de n-propoxyde de zirconium dans du n-propanol;
- acide carboxylique : $3,8.10^{-3}$ mole d'acide oléique;
- solution organique d'eau : 100 ml d'une solution 0,7 M d'eau dans du n-propanol.

L'acide oléique a d'abord été mélangé à la solution organique d'eau, puis le mélange homogène résultant a été ajouté en une fois, sous forte agitation, à la solution organique d'alcoolate de zirconium.

A l'issue d'un mûrissage de 2 heures, on a soumis le mélange réactionnel à une centrifugation et on a recueilli la poudre de zircone que l'on a lavée avec du n-propanol anhydre, puis séchée sous atmosphère d'azote, à température ambiante.

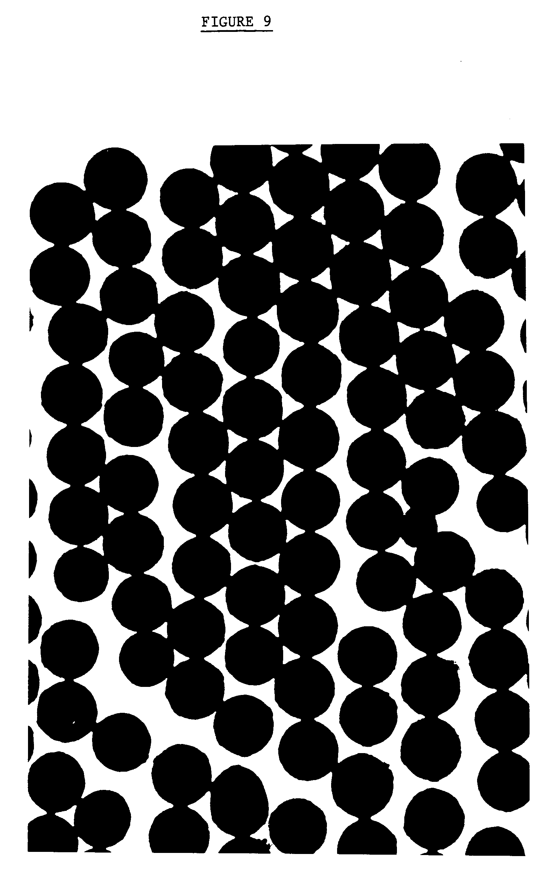

La poudre de zircone obtenue est représentée à la figure 9. Elle présentait un diamètre moyen de particules égal à 0,73 micromètres.

**Revendications**

**1.** Procédé de fabrication d'une poudre d'oxyde métallique pour matériaux céramiques dans lequel on traite un alcoolate métallique avec une solution organique d'eau de manière à hydrolyser ledit alcoolate, caractérisé en ce qu'on traite l'alcoolate métallique avec la solution organique d'eau en présence d'un composé organique acide contenant plus de six atomes de carbone dans sa molécule.

**2.** Procédé selon la revendication 1, caractérisé en ce qu'on sélectionne le composé organique acide parmi les acides carboxylique contenant plus de six atomes de carbone dans leur molécule.

**3.** Procédé selon la revendication 1 ou 2, caractérisé en ce que le composé organique acide est mis en oeuvre en une quantité molaire comprise entre 0,005 et 3 fois la quantité molaire de l'alcoolate métallique.

**4.** Procédé selon l'une quelconque des revendications 1 à 3, caractérisé en ce qu'on ajoute le composé organique acide à l'alcoolate métallique ou à la solution organique d'eau, avant l'hydrolyse.

**5.** Procédé selon l'une quelconque des revendications 1 à 4, caractérisé en ce que l'alcoolate métallique est mis en oeuvre à l'état d'une solution organique.

**6.** Procédé selon la revendication 5, caractérisé en ce qu'on met en oeuvre une solution alcoolique de l'alcoolate, contenant entre 0,05 et 1 mole d'alcoolate par litre et une solution alcoolique d'eau contenant entre 0,1 et 3 mole d'eau par litre.

**7.** Procédé selon l'une quelconque des revendications 1 à 6, caractérisé en ce que, pour réaliser l'hydrolyse, on mélange l'alcoolate métallique, la solution organique d'eau et le composé organique acide de manière à réaliser un mélange homogène avant que débute la nucléation de l'oxyde métallique.

**8.** Procédé selon l'une quelconque des revendications 1 à 7, caractérisé en ce qu'on sélectionne l'alcoolate métallique parmi les alcoolates des métaux des groupes II, III et IV du tableau périodique des éléments.

**9.** Procédé selon la revendication 8, caractérisé en ce que l'alcoolate métallique comprend de l'alcoolate de zirconium.

**Claims**

1. Process for the manufacture of a metal oxide powder for ceramic materials, in which a metal alcoholate is treated with an organic solution of water so as to hydrolyse the said alcoholate, characterised in that the metal alcoholate is treated with the organic solution of water in the presence of an acidic organic compound containing more than six carbon atoms in its molecule.

2. Process according to Claim 1, characterised in that the acidic organic compound is chosen from carboxylic acids containing more than six carbon atoms in their molecule.

3. Process according to Claim 1 or 2, characterised in that the acidic organic compound is used in a molar quantity of between 0.005 and 3 times the molar quantity of the metal alcoholate.

4. Process according to any one of Claims 1 to 3, characterised in that the acidic organic compound is added to the metal alcoholate or to the organic solution of water, before the hydrolysis.

5. Process according to any one of Claims 1 to 4, characterised in that the metal alcoholate is used in the form of an organic solution.

6. Process according to Claim 5, characterised in that an alcoholic solution of the alcoholate, containing between 0.05 and 1 mole of alcoholate per litre and an alcoholic solution of water containing between 0.1 and 3 moles of water per litre are used.

7. Process according to any one of Claims 1 to 6, characterised in that, to perform the hydrolysis, the metal alcoholate, the organic solution of water and the acidic organic compound are mixed so as to produce a homogeneous mixture before the nucleation of the metal oxide begins.

8. Process according to any one of Claims 1 to 7, characterised in that the metal alcoholate is chosen from the alcoholates of metals of groups II, III and IV of the Periodic Table of the elements.

9. Process according to Claim 8, characterised in that the metal alcoholate contains zirconium alcoholate.

**Patentansprüche**

1. Verfahren zur Herstellung eines Metalloxid-Pulvers für keramische Materialien, bei dem man ein metallisches Alkoholat mit einer organischen Lösung von Wasser behandelt, derart, daß das Alkoholat hydrolysiert wird, dadurch gekennzeichnet, daß man das metallische Alkoholat mit der organischen Lösung von Wasser behandelt in Anwesenheit einer sauren organischen Verbindung, die mehr als sechs Kohlenstoffatome in ihrem Molekül enthält.

2. Verfahren nach Anspruch 1, dadurch gekennzeichnet, daß man die saure organische Verbindung unter den Karbonsäuren auswählt, die mehr als sechs Kohlenstoffatome in ihrem Molekül enthalten.

3. Verfahren nach Anspruch 1 oder 2, dadurch gekennzeichnet, daß die saure organische Verbindung in einer molaren Menge, die die 0,005- bis 3-fache molare Menge des metallischen Alkoholats beträgt, eingesetzt wird.

4. Verfahren nach einem der Ansprüche 1 bis 3, dadurch gekennzeichnet, daß man die saure organische Verbindung dem metallischen Alkoholat oder der organischen Lösung von Wasser vor der Hydrolyse zufügt.

5. Verfahren nach einem der Ansprüche 1 bis 4, dadurch gekennzeichnet, daß das metallische Alkoholat als organische Lösung eingesetzt wird.

6. Verfahren nach Anspruch 5, dadurch gekennzeichnet, daß man eine alkoholische Lösung des Alkoholats, die zwischen 0,05 und 1 Mol Alkoholat pro Liter und eine alkoholische Lösung von Wasser, die zwischen 0,1 und 3 Mol Wasser pro Liter enthält, einsetzt.

7. Verfahren nach einem der Ansprüche 1 bis 6, dadurch gekennzeichnet, daß man zur Durchführung der Hydrolyse das metallische Alkoholat, die organische Lösung von Wasser und die saure organische Verbindung mischt, derart, daß eine homogene Mischung hergestellt wird, bevor die Keimbildung des Metalloxids beginnt.

8. Verfahren nach einem der Ansprüche 1 bis 7, dadurch gekennzeichnet, daß man das metallische Alkoholat unter den Alkoholaten der Metalle der Gruppen II, III und IV der Tabelle des periodischen Systems auswählt.

9. Verfahren nach Anspruch 8, dadurch gekennzeichnet, daß das metallische Alkoholat Zirkoniumalkoholat umfaßt.

FIGURE 1

FIGURE 2

FIGURE 3

FIGURE 4

FIGURE 5

FIGURE 6

FIGURE 7

FIGURE 8

FIGURE 9